# EUROPÄISCHE PATENTSCHRIFT

(11) **EP 4 108 951 B1**
(45) Veröffentlichungstag und Bekanntmachung des Hinweises auf die Patenterteilung: **02.10.2024**
(21) Anmeldenummer: 22179983.6
(22) Anmeldetag: 20.06.2022
(51) Int. Cl.: F16D 55/224, B61H 5/00, B61H 13/20, F16D 65/28, B60T 13/26, B60T 13/10, F16D 65/14, B61H 15/00, F16D 65/54, B60T 13/66, B60T 17/08, B60T 17/22, B61H 13/00

(54) **BREMSAKTUATOR UND BREMSEINHEIT FÜR EINE FAHRZEUGBREMSE**
BRAKE ACTUATOR AND BRAKE UNIT FOR A VEHICLE BRAKE
ACTIONNEUR DE FREIN ET UNITÉ DE FREIN POUR UN FREIN DE VÉHICULE

(30) Priorität: 25.06.2021 AT 505332021
(43) Veröffentlichungstag der Anmeldung: 28.12.2022
(73) Patentinhaber: Siemens Mobility Austria GmbH, 1210 Wien (AT)
(72) Erfinder: Zenz, Rüdiger, 8020 Graz (AT); Karoshi, Paul, 8020 Graz (AT); Trantin, Helmut, 8042 Graz (AT)
(74) Vertreter: Siemens Patent Attorneys

(56) Entgegenhaltungen:
- EP-A1- 3 683 468
- WO-A1-2012/118133
- WO-A1-2017/149244
- DE-A1- 102015 109 465
- DE-A1- 2 549 007
- DE-A1- 4 400 250
- US-A1- 2013 098 720
- US-B2- 8 915 337

## Beschreibung

Die Erfindung betrifft einen Bremsaktuator für eine Bremse eines spurgeführten Fahrzeugs, insbesondere für eine Bremse eines Fahrwerks eines Schienenfahrzeugs, umfassend eine Betätigungsvorrichtung und einen Innenraum, welcher einen ersten Innenraumabschnitt und einen zweiten Innenraumabschnitt, welcher mittels der Betätigungsvorrichtung von dem ersten Innenraumabschnitt getrennt ist, aufweist, wobei die Betätigungsvorrichtung ein in dem ersten Innenraumabschnitt mit Druck beaufschlagbares Betätigungselement und ein mit dem Betätigungselement verbundenes oder einstückig mit dem Betätigungselement ausgebildetes, in dem zweiten Innenraumabschnitt angeordnetes Kraftübersetzungselement umfasst, welche in dem Innenraum geführt sind, wobei das Kraftübersetzungselement mit einem Bremsgestänge koppelbar ist und eine Betätigungskraft von dem Betätigungselement über das Kraftübersetzungselement auf das Bremsgestänge übertragbar ist.

In Fahrwerken für spurgeführte Fahrzeuge werden häufig Reibungsbremsen eingesetzt. Krafterzeugungseinheiten bzw. Bremsaktuatoren dieser Reibungsbremsen umfassen beispielsweise Betriebs- und Feststellbremszylinder, Federn etc.

Bremsaktuatoren können Reibelemente (z.B. auf Haltevorrichtungen angeordnete Bremsbeläge oder Bremsklötze) über mit den Reibelementen und den Bremsaktuatoren verbundene mechanische Kraftübertragungseinheiten (z.B. Gestänge) an Reibpartner (z.B. Bremsscheiben oder Räder etc.) drücken.

Bei einem direkten oder indirekten, aktiven Bremsaktuator wird dieser Vorgang beispielsweise eingeleitet, wenn ein Druck eines Fluids (z.B. Druckluft aus einem Hilfsluftbehälter bei einer direkten oder indirekten, pneumatischen Bremse eines Schienenfahrzeugs) auf einen in dem Bremsaktuator geführten Kolben wirkt und der Kolben wiederum eine Kolbenkraft auf die Kraftübertragungseinheit und ein Reibelement überträgt. Dadurch wird eine Bremskraft auf einen Reibpartner bewirkt, an welchen sich das Reibelement anlegt.

Bei einem direkten, passiven Bremsaktuator wird die Bremskraft beispielsweise erzeugt, indem der Druck in dem Bremsaktuator reduziert wird und eine Bewegung des Kolbens und der Kraftübertragungseinheit sowie ein Anlegen des Reibelements an den Reibpartner durch eine Stellkraft z.B. einer Feder in dem Bremsaktuator bewirkt wird.

Aufgrund installierter Federn weisen direkte, passive Bremsaktuatoren häufig höhere Massen auf als direkte oder indirekte, aktive Bremsaktuatoren, bei welchen auf Federn verzichtet werden kann.

Direkte, passive Bremsaktuatoren werden beispielsweise oft bei Reibungsbremsen von Hochflurstraßenbahnen eingesetzt.

Aus dem Stand der Technik ist beispielsweise die EP 1 086 871 A2 bekannt, welche einen aktiven Bremsaktuator für eine Klotzbremse eines Schienenfahrzeugs zeigt. Über einen Anschluss wird der Bremsaktuator mit Fluiddruck versorgt. Aufgrund des Fluiddrucks wird ein Kolben betätigt. Eine Kolbenkraft wird über einen Keil auf eine Druckstange und von der Druckstange auf einen Bremsschuh und einen Bremsklotz übertragen. Der Keil weist im Bereich seiner Verbindung mit dem Kolben eine größere Höhe als im Kraftübertragungsbereich zu der Druckstange auf, wodurch bei auf den Kolben wirkendem Fluiddruck die Druckstange auslenkt und den Bremsklotz an ein Rad des Schienenfahrzeugs anlegt.

Dieser Ansatz weist in seiner bekannten Form den Nachteil auf, dass der gezeigte Bremsaktuator nicht als direkter, passiver Bremsaktuator eingesetzt werden kann, da eine Reduktion des Fluiddrucks in dem Bremsaktuator zu einer Bremskraftreduktion bzw. zu einem Ablegen des Bremsklotzes von dem Rad führt.

Ferner ist das "Knorr-Bremse-Handbuch - Schienenfahrzeuge, Bremstechnische Begriffe und Werte für Schienenfahrzeuge", Ausgabe 1976, Knorr-Bremse-GmbH München, Seite 33, Abschnitt "Federspeicher-Bremseinheit", bekannt, in welchem ein direkter, passiver Bremsaktuator beschrieben ist, welcher einen Hebel als Kraftübersetzungsvorrichtung aufweist. Dieser Ansatz weist in seiner bekannten Form die für einen Federspeicher-Bremsaktuator typischen Nachteile einer bauartbedingten Komplexität, eines bauartbedingt erhöhten Bauraumbedarfs sowie einer bauartbedingt erhöhten Masse auf. Weiterhin zeigt die DE 10 2015 109465 A1 eine Bremszange mit zwei Bremshebeln, zwischen welchen ein Führungsstück angeordnet ist. In eine Bohrung des Führungsstücks sind Wälzkörper eingesetzt, welche abgeschrägte Abschnitte der Bremshebel kontaktieren.

Der Erfindung liegt daher die Aufgabe zugrunde, einen gegenüber dem Stand der Technik weiterentwickelten Bremsaktuator anzugeben, welcher einerseits als direkter, passiver Bremsaktuator eingesetzt werden kann und andererseits Anforderungen in Bezug auf kleine Abmessungen und eine möglichst geringe Masse erfüllt.

Erfindungsgemäß wird diese Aufgabe gelöst mit einem Bremsaktuator nach Anspruch 1, bei welchem das Kraftübersetzungselement eine mit zunehmender Distanz von dem Betätigungselement zunehmende Höhe aufweist, wobei das Kraftübersetzungselement über drehbar mit dem Bremsgestänge verbundene Rollen, welche auf dem Kraftübersetzungselement abrollen können, mit dem Bremsgestänge gekoppelt ist.

Dadurch wird ein direkter, passiver Bremsaktuator mit interner Übersetzung ermöglicht. Das Kraftübersetzungselement kann einfach und kompakt ausgeführt sein und eine geringe Masse aufweisen; auf innerhalb des Bremsaktuators angeordnete Hebel etc. kann verzichtet werden. Das Kraftübersetzungselement ist über drehbar mit dem Bremsgestänge verbundene Rollen, welche auf dem Kraftübersetzungselement abrollen können, mit dem Bremsgestänge gekoppelt. Mittels des Drucks auf das Betätigungselement erzeugbare Betätigungskräfte sind von dem Betätigungselement über das Kraftübersetzungselement auf das Bremsgestänge übertragbar.

Das Bremsgestänge kann beispielsweise über eine Bremsbrücke auf einem Fahrwerksrahmen gelagert sein, Bremshebel der Bremszange können um Drehpunkte auf der Bremsbrücke drehbar sein und bei Druckreduktion in dem ersten Innenraumabschnitt, wenn beispielsweise die Bremshebel über die auf dem Kraftübersetzungselement abrollenden Rollen aufgrund der zunehmenden Höhe des Kraftübersetzungselements im Bereich des Bremsaktuators gespreizt werden, auslenken und beispielsweise Bremsbeläge, welche an von dem Bremsaktuator abgewandten Enden der Bremshebel mit den Bremshebeln verbunden sein können, an eine Bremsscheibe drücken. Mit der internen Übersetzung und einer Hebelübersetzung aufgrund der Bremshebel kann demnach eine zweistufig übersetzte Bremszange realisiert werden.

Aufgrund kompakter Abmessungen des erfindungsgemäßen Bremsaktuators kann ein Bauraumbedarf reduziert werden bzw. es kann ein verfügbarer Bauraum besser genutzt werden und der Bremsaktuator ist, beispielsweise im Zusammenhang mit Bedienungs- und Wartungs- bzw. Instandhaltungshandlungen etc., leicht zugänglich.

Weitere vorteilhafte Ausgestaltungen des erfindungsgemäßen Bremsaktuators ergeben sich aus den Unteransprüchen.

Günstig ist es beispielsweise, wenn mit der Betätigungsvorrichtung zumindest ein in dem Innenraum gelagertes Federelement verbunden ist.

Durch diese Maßnahme wird, bei einer Reduktion des Drucks auf das Betätigungselement, aufgrund einer Federrückstellkraft eine Bewegung der Betätigungsvorrichtung gefördert.

Eine Bremsung kann mittels des erfindungsgemäßen Bremsaktuators eingeleitet und durchgeführt werden, wenn in einem betätigten Bremszustand ein Druck auf das Betätigungselement geringer ist als in einem gelösten Bremszustand und das zumindest eine Federelement zumindest teilweise entspannt ist.

Eine Bremsung kann verhindert werden, wenn in einem gelösten Bremszustand das Betätigungselement in einer Weise mit Druck beaufschlagt ist, dass das zumindest eine Federelement an einer Entspannung gehindert ist.

Eine konstruktiv besonders einfache Lösung unter Einsatz eines Standardbauteils wird erreicht, wenn das Kraftübersetzungselement keilförmig ausgebildet ist und dessen Höhe eine Keilhöhe ist.

In diesem Zusammenhang kann es auch vorteilhaft sein, wenn das Kraftübersetzungselement einen in Abhängigkeit einer Keillänge veränderlichen Neigungswinkel aufweist.

Durch diese Maßnahme kann ein nichtlineares Verhalten des Federelements bzw. einer die auf das Bremsgestänge übertragbare Betätigungskraft beeinflussenden Federkraft durch das Kraftübersetzungselement kompensiert werden. Ein nichtlineares Verhalten des Federelements kann beispielsweise bei Entlastung der Feder aufgrund von Reibungsverlusten, welche eine bei Belastung des Federelements aufgebrachte Arbeit reduzieren, auftreten.

Weiterhin kann durch diese Maßnahme eine Anlegegeschwindigkeit bzw. eine Zeitdauer von einem abgelegten bis zu einem angelegten Zustand eines Reibelements (z.B. eines Bremsbelags, eines Bremsklotzes etc.) an einen Reibpartner (z.B. eine Bremsscheibe, ein Rad etc.) beeinflusst bzw. gesteuert werden.

Eine besondere kompakte, in sich verschränkte Ausführung des erfindungsgemäßen Bremsaktuators wird erzielt, wenn das zumindest eine Federelement das Kraftübersetzungselement zumindest teilweise ummantelnd angeordnet ist.

Hierbei kann das Federelement beispielsweise als Schraubenfeder ausgeführt sein, deren Windungen ein freies Volumen umgrenzen, in welchem das Kraftübersetzungselement angeordnet sein kann.

Es ist hilfreich, wenn mit einem Bremsaktuatorgehäuse eine Hydraulik-Lösevorrichtung verbunden ist, wobei in einem gelösten Bremszustand die Hydraulik-Lösevorrichtung die Betätigungsvorrichtung in einer Weise kontaktiert, dass das zumindest eine Federelement an einer Entspannung gehindert ist.

Dadurch wird ein von außen leicht durchführbarer Lösevorgang des erfindungsgemäßen Bremsaktuators ermöglicht. Ein Notlösevorgang kann beispielsweise dann erforderlich sein, wenn eine Beaufschlagung des Betätigungselements mit Druck fehlschlägt (beispielsweise aufgrund einer Leckage einer Bremsleitung). Lösevorgänge mittels der Hydraulik-Lösevorrichtung gemäß dieser Maßnahme können aber auch aus Gründen von Wartungs- oder Instandhaltungs- bzw. Instandsetzungsmaßnahmen hilfreich sein, da dadurch das Federelement arretiert werden kann.

Eine günstige Lösung erhält man ferner, wenn mit einem Bremsaktuatorgehäuse eine Mechanik-Lösevorrichtung verbunden ist, wobei in einem gelösten Bremszustand die Betätigungsvorrichtung mit dem Bremsaktuatorgehäuse verschraubt ist.

Durch diese Maßnahme kann die Betätigungsvorrichtung sicher arretiert und der gelöste Bremszustand auch über einen längeren Zeitraum beibehalten werden (beispielsweise bei einem Defekt des erfindungsgemäßen Bremsaktuators oder während Wartungs- oder Instandhaltungs- bzw. Instandsetzungsmaßnahmen).

Weiterhin kann die Mechanik-Lösevorrichtung beispielsweise als Redundanz zu der Hydraulik-Lösevorrichtung eingesetzt sein und beispielsweise bei einem Versagen der Hydraulik-Lösevorrichtung betätigt werden.

Hilfreich kann es auch sein, wenn mit einem Bremsaktuatorgehäuse ein Endlagenschalter, welcher in einer Endlage der Betätigungsvorrichtung mittels der Betätigungsvorrichtung betätigt ist, verbunden ist.

Dadurch ist der Endlagenschalter von außen leicht zugänglich, wodurch beispielsweise eine Demontage bzw. eine Montage des Endlagenschalters (z.B. für einen Tausch oder eine Reparatur etc.) einen lediglich geringen Aufwand verursacht.

Eine direkte, passive Fahrzeugbremse kann realisiert werden, wenn eine Bremseinheit einen erfindungsgemäßen Bremsaktuator umfasst.

Eine Scheibenbremse (z.B. eine Radscheibenbremse oder eine Wellenscheibenbremse eines Schienenfahrzeugs) kann ermöglicht werden, wenn die Bremseinheit als Bremszange ausgebildet ist.

Eine bremsende Kontaktkraft kann auf ein Rad eines Fahrzeugs aufgebracht werden, wenn die Bremseinheit als Klotzbremseinheit ausgebildet ist.

Um ein sicheres Anlegen von Bremsbelägen oder Bremsklötzen der Bremseinheit auch im Hinblick auf eine Abnutzung der Bremsbeläge oder der Bremsklötze und auf einen dadurch vergrößerten Hubbedarf der Bremseinheit zu gewährleisten, ist es hilfreich, wenn mit einem Bremsgestänge ein Verschleißnachsteller, welcher in den Bremsaktuator geführt ist, verbunden ist.

Nachfolgend wird die Erfindung anhand von Ausführungsbeispielen näher erläutert.

Es zeigen beispielhaft:
- Fig. 1:: Eine schematische Darstellung einer Bremszange einer beispielhaften Ausführungsvariante einer erfindungsgemäßen Bremseinheit eines Schienenfahrzeugs mit einer beispielhaften Ausführungsvariante eines erfindungsgemäßen Bremsaktuators in einem betätigten Bremszustand,
- Fig. 2:: Eine schematische Darstellung einer Bremszange einer beispielhaften Ausführungsvariante einer erfindungsgemäßen Bremseinheit eines Schienenfahrzeugs mit einer beispielhaften Ausführungsvariante eines erfindungsgemäßen Bremsaktuators in einem gelösten Bremszustand,
- Fig. 3:: Eine beispielhafte Ausführungsvariante eines erfindungsgemäßen Bremsaktuators, mit welchem ein Bremsgestänge gekoppelt ist, in einem mittels einer Hydraulik-Lösevorrichtung gelösten Bremszustand,
- Fig. 4:: Eine beispielhafte Ausführungsvariante eines erfindungsgemäßen Bremsaktuators, mit welchem ein Bremsgestänge gekoppelt ist, in einem mittels einer Mechanik-Lösevorrichtung gelösten Bremszustand, und
- Fig. 5:: Ein keilförmiges Kraftübersetzungselement einer beispielhaften Ausführungsvariante eines erfindungsgemäßen Bremsaktuators, welches einen in Abhängigkeit einer Keillänge veränderlichen Neigungswinkel aufweist.

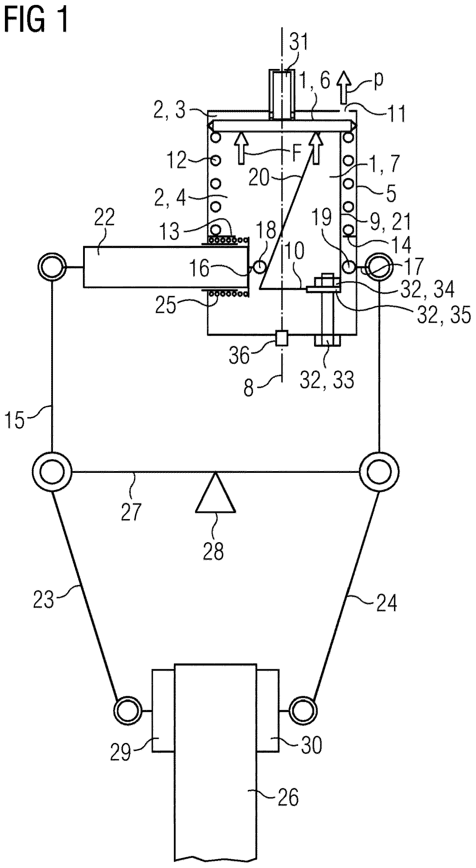

Fig. 1 zeigt eine schematische Darstellung einer Bremszange einer beispielhaften Ausführungsvariante einer als Scheibenbremseinheit ausgebildeten erfindungsgemäßen Bremseinheit eines Fahrwerks eines Schienenfahrzeugs, d.h. eines spurgeführten Fahrzeugs, mit einer beispielhaften Ausführungsvariante eines erfindungsgemäßen, direkten, pneumatischen, passiven Bremsaktuators.

Der Bremsaktuator umfasst eine Betätigungsvorrichtung 1 und einen Innenraum 2. Der Innenraum 2 weist einen ersten Innenraumabschnitt 3 und einen zweiten Innenraumabschnitt 4 auf, welche mittels der Betätigungsvorrichtung 1 voneinander getrennt sind. Größen bzw. Volumina des ersten Innenraumabschnitts 3 und des zweiten Innenraumabschnitts 4 hängen von einer Position der Betätigungsvorrichtung 1 ab, sind also variabel.

Es ist möglich, dass die Betätigungsvorrichtung 1 an ein Bremsaktuatorgehäuse 5 angelegt ist und der erste Innenraumabschnitt 3 somit ein Volumen von 0 m³ aufweist.

Die metallische Betätigungsvorrichtung 1 weist ein als Flachkolben ausgeführtes Betätigungselement 6 sowie ein keilförmiges Kraftübersetzungselement 7 auf, die in dem Innenraum 2 in Richtung einer Längsachse 8 des Bremsaktuators geführt sind, wobei das Kraftübersetzungselement 7 in dem zweiten Innenraumabschnitt 4 angeordnet ist.

Eine Keillänge 9 ist parallel zu der Längsachse 8 ausgerichtet, eine Keilhöhe 10 orthogonal zu der Längsachse 8.

Das Betätigungselement 6 ist mit dem Kraftübersetzungselement 7 stoffschlüssig verbunden, erfindungsgemäß ist jedoch beispielsweise auch eine Schraubenverbindung zwischen dem Betätigungselement 6 und dem Kraftübersetzungselement 7 denkbar. Ferner ist es erfindungsgemäß vorstellbar, dass das Betätigungselement 6 und das Kraftübersetzungselement 7 einstückig, z.B. als Gussteil ausgebildet sind.

Der Bremsaktuator ist als pneumatischer Bremszylinder ausgeführt und weist in dem Bremsaktuatorgehäuse 5 einen Druckluftanschluss 11 auf, über welchen der erste Innenraumabschnitt 3 mit Druckluft versorgt wird bzw. der Bremsaktuator belüftet und entlüftet wird.

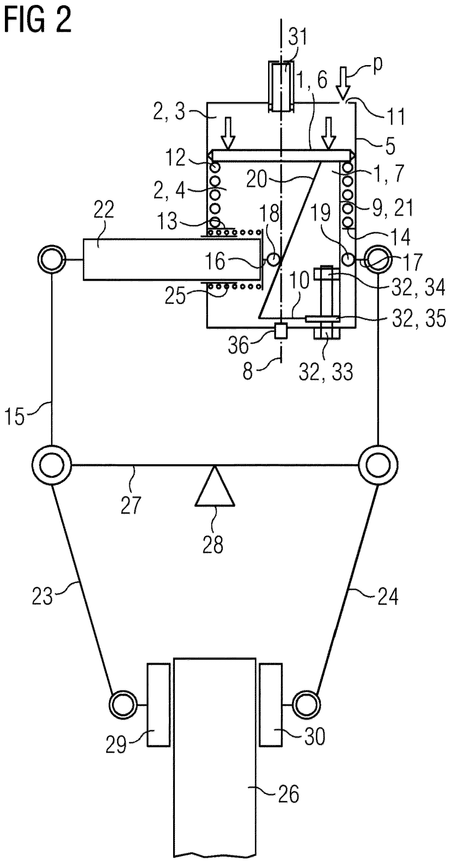

Über den Druckluftanschluss 11 und den ersten Innenraumabschnitt 3 kann das Betätigungselement 6 mit einem Druck p beaufschlagt werden, um die Bremseinheit in einen gelösten Bremszustand zu bringen, wie er beispielhaft in Fig. 2 dargestellt ist.

In Fig. 1 ist jedoch kein gelöster Bremszustand, sondern ein betätigter Bremszustand dargestellt, in welchem der Druck p in dem ersten Innenraumabschnitt 3 reduziert ist bzw. der Bremsaktuator entlüftet ist.

Der betätigte Bremszustand wird also durch Entlüftung des Bremsaktuators über den Druckluftanschluss 11 erreicht. Dadurch bewegt sich die Betätigungsvorrichtung 1 in Richtung der Längsachse 8 und nähert sich dabei dem Druckluftanschluss 11.

Die Bewegung wird durch Freigabe eines Federelements 12 eingeleitet, welches mit der Betätigungsvorrichtung 1 verbunden ist und über einen ersten Kragarm 13 und einen zweiten Kragarm 14 in dem zweiten Innenraumabschnitt 4 gelagert ist.

Das Federelement 12 ist als metallische Schraubenfeder ausgebildet und ummantelt das Kraftübersetzungselement 7 teilweise. Eine Federlängsachse verläuft in der Längsachse 8 des Bremsaktuators.

Aufgrund des reduzierten Drucks p in dem ersten Innenraumabschnitt 3 verschiebt eine Rückstellkraft des Federelements 12, welche als Betätigungskraft F des Bremsaktuators fungiert, die Betätigungsvorrichtung 1 parallel zu der Längsachse 8, wobei sich die Betätigungsvorrichtung 1 dem Druckluftanschluss 11 nähert.

Das Kraftübersetzungselement 7 weist eine mit zunehmender Distanz von dem Betätigungselement 6 stetig zunehmende Höhe bzw. Keilhöhe 10 auf. Die Höhe bzw. Keilhöhe 10 ist quer zu einer Bewegungsrichtung der Betätigungsvorrichtung, d.h. quer zu der Längsachse 8 ausgerichtet.

Erfindungsgemäß ist es auch denkbar, dass die Höhe bzw. Keilhöhe 10 einen nichtlinearen (z.B. quadratischen) oder unstetigen Verlauf aufweist. Bei einem unstetigen Verlauf kann eine Verbindung zwischen Endpunkten der Höhe bzw. Keilhöhe 10 und der Keillänge 9 beispielsweise als Polygonzug ausgebildet sein.

Mit dem Kraftübersetzungselement 7 ist ein Bremsgestänge 15 der Bremszange gekoppelt. Mit einem ersten Verbindungselement 16 des Bremsgestänges 15 ist eine erste Rolle 18 drehbar verbunden, mit einem zweiten Verbindungselement 17 des Bremsgestänges 15 ist eine zweite Rolle 19 drehbar verbunden. Die erste Rolle 18 kontaktiert eine erste Fläche 20 des Kraftübersetzungselements 7, welche schräg zu der Keillänge 9 und der Keilhöhe 10 ausgerichtet ist. Die zweite Rolle 19 kontaktiert eine zweite Fläche 21 des Kraftübersetzungselements 7, welche parallel zu der Keillänge 9 ausgerichtet ist, wobei die Keillänge 9 in der zweiten Fläche 21 angeordnet ist.

Die erste Rolle 18 ist über das erste Verbindungselement 16 und einen Verschleißnachsteller 22 drehgelenkig mit einem ersten Bremshebel 23 des Bremsgestänges 15 verbunden.

Der Verschleißnachsteller 22 ist mit dem ersten Bremshebel 23 verbunden und über das Bremsaktuatorgehäuse 5 in den Bremsaktuator geführt. Eine Nachstellfeder 25, welche mit dem Verschleißnachsteller 22 gekoppelt ist, bewirkt, dass ein sich abnutzungsbedingt vergrößernder Spalt zwischen mit dem Bremsgestänge 15 verbundenen Bremsbelägen und einer Wellenbremsscheibe 26 des Fahrwerks durch inkrementelle Auslenkung des ersten Bremshebels 23 bzw. laufende Zustellung der Bremsbeläge verringert bzw. konstant gehalten wird.

Die zweite Rolle 19 ist über das in den Bremsaktuator geführte zweite Verbindungselement 17 drehgelenkig mit einem zweiten Bremshebel 24 des Bremsgestänges 15 verbunden. Der erste Bremshebel 23 und der zweite Bremshebel 24 sind drehgelenkig mit einer Bremsbrücke 27 der Bremszange gekoppelt. Die Bremsbrücke 27 ist über ein Lager 28 mit einem nicht gezeigten Fahrwerksrahmen des Schienenfahrzeugs verbunden.

Auf einer der Bremsbrücke 27, der ersten Rolle 18 und der zweiten Rolle 19 abgewandten Seite der Bremszange sind die Bremsbeläge der Bremseinheit mit dem Bremsgestänge 15 verbunden. Mit dem ersten Bremshebel 23 ist ein erster Bremsbelag 29 drehgelenkig gekoppelt, mit dem zweiten Bremshebel 24 ist ein zweiter Bremsbelag 30 drehgelenkig gekoppelt.

In dem in Fig. 1 gezeigten betätigten Bremszustand sind der erste Bremsbelag 29 und der zweite Bremsbelag 30 an die Wellenbremsscheibe 26 angelegt.

Ein Anlegen des ersten Bremsbelags 29 und des zweiten Bremsbelags 30 erfolgt, wenn der Druck p in dem ersten Innenraumabschnitt 3 sinkt, das Federelement 12 entspannt und die Betätigungsvorrichtung 1 aufgrund der Betätigungskraft F in einer Weise an den Druckluftanschluss 11 angenähert wird, dass sich der erste Innenraumabschnitt 3 verkleinert. Die erste Rolle 18 und die zweite Rolle 19 rollen auf dem Kraftübersetzungselement 7 ab. Die Betätigungskraft F wird mittels des Kraftübersetzungselements 7 übersetzt und ausgehend von dem Betätigungselement 6 über das Kraftübersetzungselement 7 und die erste Rolle 18 und die zweite Rolle 19 auf das Bremsgestänge 15 übertragen.

Aufgrund der mit zunehmender Distanz von dem Betätigungselement 6 zunehmenden Höhe bzw. Keilhöhe 10 des Kraftübersetzungselements 7 vergrößert sich während einer Annäherung der Betätigungsvorrichtung 1 an den Druckluftanschluss 11 ein Abstand zwischen der ersten Rolle 18 und der zweiten Rolle 19.

Aufgrund drehgelenkiger Kopplungen des ersten Bremshebels 23 und des zweiten Bremshebels 24 mit der Bremsbrücke 27 führen der erste Bremshebel 23 und der zweite Bremshebel 24 Drehbewegungen aus, durch welche sich Abstände zwischen dem ersten Bremsbelag 29 und dem zweiten Bremsbelag 30 einerseits und der Wellenbremsscheibe 26 andererseits verringern, bis der erste Bremsbelag 29 und der zweite Bremsbelag 30 an die Wellenbremsscheibe 26 angelegt sind.

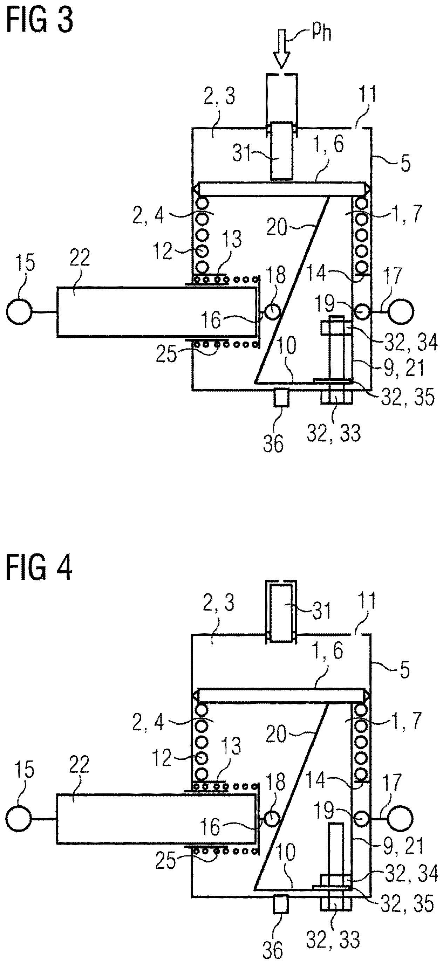

Mit dem Bremsaktuatorgehäuse 5 ist im Bereich des ersten Innenraumabschnitts 3 eine Hydraulik-Lösevorrichtung 31 verbunden, wobei in einem beispielsweise in Fig. 3 gezeigten gelösten Bremszustand die Hydraulik-Lösevorrichtung 31 das Betätigungselement 6 in einer Weise kontaktiert, dass das Federelement 12 an einer Entspannung gehindert ist.

Die Hydraulik-Lösevorrichtung 31 ist als hydraulisch betätigter Hydraulikkolben ausgebildet, welcher in dem Bremsaktuatorgehäuse 5 gehalten bzw. geführt ist. Bei Betätigung des Hydraulikkolbens, d.h. bei Aufbringung eines Hydraulikdrucks, stößt der Hydraulikkolben auf das Betätigungselement 6 und arretiert das Federelement 12 in einem gespannten Federzustand.

Weiterhin ist mit dem Bremsaktuatorgehäuse 5 eine auch im Zusammenhang mit Fig. 4 beschriebene Mechanik-Lösevorrichtung 32 verbunden, welche eine Schraube 33 und eine Mutter 34 umfasst und im Bereich des zweiten Innenraumabschnitts 4 angeordnet ist. Die Schraube 33 ist in den Bremsaktuator geführt, wobei ein Schraubenkopf der Schraube 33 außen an dem Bremsaktuatorgehäuse 5 anliegt. Die Schraube 33 ist weiterhin durch eine durchbohrte Lasche 35 des Kraftübersetzungselements 7 geführt. Soll ein mittels der Mechanik-Lösevorrichtung 32 gelöster Bremszustand erreicht bzw. gehalten werden, muss die Mutter 34, auf der Lasche 35 aufliegend, auf einem Schraubengewinde der Schraube 33 angezogen werden, bis sich die Betätigungsvorrichtung 1 von dem Druckluftanschluss 11 wegbewegt, sich der Abstand zwischen der ersten Rolle 18 und der zweiten Rolle 19 verringert, der erste Bremshebel 23 und der zweite Bremshebel 24 auslenken und der erste Bremsbelag 29 sowie der zweite Bremsbelag 30 von der Wellenbremsscheibe 26 ablegen. In dem mittels der Mechanik-Lösevorrichtung 32 gelösten Bremszustand ist die Betätigungsvorrichtung 1 mit dem Bremsaktuatorgehäuse 5 verschraubt.

Mit dem Bremsaktuatorgehäuse 5 ist im Bereich des zweiten Innenraumabschnitts 4 ein Endlagenschalter 36 verbunden, welcher in einer Endlage der Betätigungsvorrichtung 1 mittels der Betätigungsvorrichtung 1 betätigt ist.

Der Endlagenschalter 36 ist in dem Bremsaktuatorgehäuse 5 geführt und von außen zugänglich. Das in dem Innenraum 2 geführte Kraftübersetzungselement 7 drückt in einem gelösten Bremszustand, kurz bevor es das Bremsaktuatorgehäuse 5 kontaktiert, auf den Endlagenschalter 36 und betätigt diesen. Über nicht gezeigte Signalleitungen wird eine Betätigung des Endlagenschalters 36 in einen ebenfalls nicht dargestellten Führerraum des Schienenfahrzeugs übertragen und auf einer Anzeige des Führerraums angezeigt.

Erfindungsgemäß ist es vorstellbar, dass der Endlagenschalter 36 nicht erst bei Kontakt mit dem Kraftübersetzungselement 7 reagiert, sondern bereits ab einem bestimmten Abstand zwischen dem Endlagenschalter 36 und dem Kraftübersetzungselement 7, wobei der Endlagenschalter 36 beispielsweise als induktiver Sensor ausgeführt sein kann.

Erfindungsgemäß ist es auch denkbar, dass die Bremseinheit als Klotzbremseinheit ausgebildet ist, bei welcher die Betätigungskraft F des Bremsaktuators über das Kraftübersetzungselement 7 und das Bremsgestänge 15 auf einen Bremsklotz und ein nicht gezeigtes Rad des Fahrwerks übertragen wird.

In Fig. 2 ist eine schematische Darstellung einer Bremszange einer beispielhaften Ausführungsvariante einer erfindungsgemäßen Bremseinheit eines Schienenfahrzeugs mit einer beispielhaften Ausführungsvariante eines erfindungsgemäßen Bremsaktuators in einem gelösten Bremszustand dargestellt.

Die Ausführungsvariante der Bremszange bzw. des Bremsaktuators gemäß Fig. 2 entspricht jener Ausführungsvariante, die auch in Fig. 1, allerdings in einem betätigten Bremszustand, gezeigt ist. Es werden daher in Fig. 2 weitgehend die gleichen Bezugszeichen verwendet wie in Fig. 1.

In dem betätigten Bremszustand nach Fig. 1 ist ein Druck p auf ein Betätigungselement 6 einer Betätigungsvorrichtung 1 des Bremsaktuators geringer als in dem gelösten Bremszustand gemäß Fig. 2 und ein mit der Betätigungsvorrichtung 1 verbundenes Federelement 12 ist in Fig. 1 weitgehend entspannt.

In dem gelösten Bremszustand nach Fig. 2 ist das Betätigungselement 6 mit dem Druck p beaufschlagt, so dass das Federelement 12 an einer Entspannung gehindert ist bzw. arretiert bleibt.

Die Betätigungsvorrichtung 1 ist mit einem keilförmigen Kraftübersetzungselement 7 verbunden. Mit einem Bremsgestänge 15 einer Bremszange sind eine erste Rolle 18 und eine zweite Rolle 19 drehbar verbunden, welche das Kraftübersetzungselement 7 kontaktieren. Ein Abstand zwischen der ersten Rolle 18 und der zweiten Rolle 19 ist in dem gelösten Bremszustand kleiner als in dem in Fig. 1 gezeigten betätigten Bremszustand. Dadurch weist das Bremsgestänge 15 eine Stellung auf, in welcher ein erster Bremsbelag 29 und ein zweiter Bremsbelag 30, welche mit dem Bremsgestänge 15 verbunden sind, von einer Wellenbremsscheibe 26 abgelegt sind.

Fig. 3 zeigt eine beispielhafte Ausführungsvariante eines erfindungsgemäßen Bremsaktuators einer Bremszange, wie er auch in Fig. 1 dargestellt ist.

Mit dem Bremsaktuator ist ein Bremsgestänge 15 der Bremszange gekoppelt, welches ebenfalls in Fig. 1 gezeigt ist. Es werden daher in Fig. 3 teilweise gleiche Bezugszeichen wie in Fig. 1 verwendet.

Die Bremszange ist in einem mittels einer als Hydraulikkolben ausgebildeten Hydraulik-Lösevorrichtung 31 gelösten Bremszustand. Die Hydraulik-Lösevorrichtung 31 ist auch im Zusammenhang mit Fig. 1 beschrieben. Der Hydraulikkolben drückt aufgrund eines Hydraulikdrucks pₕ auf ein Betätigungselement 6 einer Betätigungsvorrichtung 1 des Bremsaktuators und arretiert ein mit einem Bremsaktuatorgehäuse 5 und dem Betätigungselement 6 verbundenes Federelement 12.

Dadurch ist das Bremsgestänge 15 an einer Auslenkung gehindert. Ein erster Bremsbelag 29 und ein zweiter Bremsbelag 30, welche in Fig. 1 gezeigt sind und mit dem Bremsgestänge 15 drehgelenkig gekoppelt sind, sind von einer ebenfalls in Fig. 1 dargestellten Wellenbremsscheibe 26 abgelegt.

Fig. 4 zeigt eine beispielhafte Ausführungsvariante eines erfindungsgemäßen Bremsaktuators einer Bremszange, wie er auch in Fig. 3 dargestellt ist.

Wie ebenfalls in Fig. 3 gezeigt, ist mit dem Bremsaktuator ein Bremsgestänge 15 der Bremszange gekoppelt.

Es werden daher in Fig. 4 gleiche Bezugszeichen wie in Fig. 3 verwendet.

Die Bremszange ist in einem mittels einer Mechanik-Lösevorrichtung 32 gelösten Bremszustand. Die Mechanik-Lösevorrichtung 32 ist auch im Zusammenhang mit Fig. 1 beschrieben und umfasst eine Schraube 33 und eine Mutter 34, über welche eine Betätigungsvorrichtung 1 des Bremsaktuators in dem gelösten Bremszustand mit einem Bremsaktuatorgehäuse 5 verschraubt ist.

Dadurch ist das Bremsgestänge 15 an einer Auslenkung gehindert. Ein erster Bremsbelag 29 und ein zweiter Bremsbelag 30, welche in Fig. 1 gezeigt sind und mit dem Bremsgestänge 15 drehgelenkig gekoppelt sind, sind von einer ebenfalls in Fig. 1 dargestellten Wellenbremsscheibe 26 abgelegt.

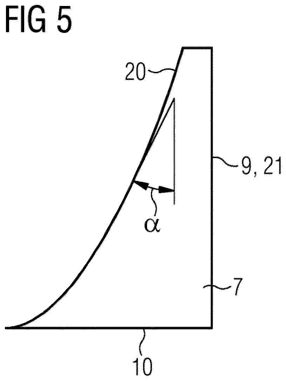

In Fig. 5 ist ein keilförmiges Kraftübersetzungselement 7 einer beispielhaften Ausführungsvariante eines erfindungsgemäßen Bremsaktuators offenbart, welches einen in Abhängigkeit einer Keillänge 9 veränderlichen Neigungswinkel α aufweist. Ein Gradient des Neigungswinkels α ist mit zunehmender Keilhöhe 10 zunehmend ausgebildet. Eine erste Fläche 20 bzw. eine Wirkfläche des Kraftübersetzungselements 7 ist gekrümmt ausgebildet.

Das Kraftübersetzungselement 7 kann beispielsweise in jenem in Fig. 1 gezeigten Bremsaktuator eingesetzt werden und mit einem ebenfalls in Fig. 1 dargestellten Betätigungselement 6 des Bremsaktuators verbunden oder einstückig damit ausgebildet werden.

Aufgrund des Gradienten des Neigungswinkels α wird ein nichtlineares Verhalten eines ebenfalls in Fig. 1 gezeigten Federelements 12, welches mit dem Betätigungselement 6 verbunden ist, bzw. einer im Zusammenhang mit Fig. 1 beschriebenen Betätigungskraft F, welche von dem nichtlinearen Verhalten des Federelements 12 beeinflusst wird und über das Kraftübersetzungselement 7 auf ein in Fig. 1 gezeigtes Bremsgestänge 15, welches über die erste Fläche 20 und eine zweiten Fläche 21 des Kraftübersetzungselements 7, in welcher die Keillänge 9 angeordnet ist, mit dem Kraftübersetzungselement 7 gekoppelt ist, übertragen wird, kompensiert bzw. linearisiert.

Ein nichtlineares Verhalten des Federelements 12 kann beispielsweise bei dessen Entlastung aufgrund von Reibungsverlusten, welche eine bei Belastung des Federelements 12 aufgebrachte Arbeit reduzieren, auftreten.

### Liste der Bezeichnungen

- 1: Betätigungsvorrichtung
- 2: Innenraum
- 3: Erster Innenraumabschnitt
- 4: Zweiter Innenraumabschnitt
- 5: Bremsaktuatorgehäuse
- 6: Betätigungselement
- 7: Kraftübersetzungselement
- 8: Längsachse
- 9: Keillänge
- 10: Keilhöhe
- 11: Druckluftanschluss
- 12: Federelement
- 13: Erster Kragarm
- 14: Zweiter Kragarm
- 15: Bremsgestänge
- 16: Erstes Verbindungselement
- 17: Zweites Verbindungselement
- 18: Erste Rolle
- 19: Zweite Rolle
- 20: Erste Fläche
- 21: Zweite Fläche
- 22: Verschleißnachsteller
- 23: Erster Bremshebel
- 24: Zweiter Bremshebel
- 25: Nachstellfeder
- 26: Wellenbremsscheibe
- 27: Bremsbrücke
- 28: Lager
- 29: Erster Bremsbelag
- 30: Zweiter Bremsbelag
- 31: Hydraulik-Lösevorrichtung
- 32: Mechanik-Lösevorrichtung
- 33: Schraube
- 34: Mutter
- 35: Lasche
- 36: Endlagenschalter

- p: Druck
- F: Betätigungskraft
- pₕ: Hydraulikdruck
- α: Neigungswinkel

## Patentansprüche

1. Bremsaktuator für eine Bremse eines spurgeführten Fahrzeugs, insbesondere für eine Bremse eines Fahrwerks eines Schienenfahrzeugs, umfassend eine Betätigungsvorrichtung (1) und einen Innenraum (2), welcher einen ersten Innenraumabschnitt (3) und einen zweiten Innenraumabschnitt (4), welcher mittels der Betätigungsvorrichtung (1) von dem ersten Innenraumabschnitt (3) getrennt ist, aufweist, wobei die Betätigungsvorrichtung (1) ein in dem ersten Innenraumabschnitt (3) mit Druck (p) beaufschlagbares Betätigungselement (6) und ein mit dem Betätigungselement (6) verbundenes oder einstückig mit dem Betätigungselement (6) ausgebildetes, in dem zweiten Innenraumabschnitt (4) angeordnetes Kraftübersetzungselement (7) umfasst, welche in dem Innenraum (2) geführt sind, wobei das Kraftübersetzungselement (7) mit einem Bremsgestänge (15) koppelbar ist und eine Betätigungskraft (F) von dem Betätigungselement (6) über das Kraftübersetzungselement (7) auf das Bremsgestänge (15) übertragbar ist, **dadurch gekennzeichnet, dass** das Kraftübersetzungselement (7) eine mit zunehmender Distanz von dem Betätigungselement (6) zunehmende Höhe aufweist, wobei das Kraftübersetzungselement (7) über drehbar mit dem Bremsgestänge (15) verbundene Rollen, welche auf dem Kraftübersetzungselement (7) abrollen können, mit dem Bremsgestänge (15) gekoppelt ist.

2. Bremsaktuator nach Anspruch 1, **dadurch gekennzeichnet, dass** die Höhe quer oder im Wesentlichen quer zu einer Bewegungsrichtung der Betätigungsvorrichtung (1) ausgerichtet ist.

3. Bremsaktuator nach Anspruch 1 oder 2, **dadurch gekennzeichnet, dass** mit der Betätigungsvorrichtung (1) zumindest ein in dem Innenraum (2) gelagertes Federelement (12) verbunden ist.

4. Bremsaktuator nach Anspruch 3, **dadurch gekennzeichnet, dass** in einem betätigten Bremszustand ein Druck (p) auf das Betätigungselement (6) geringer ist als in einem gelösten Bremszustand und das zumindest eine Federelement (12) zumindest teilweise entspannt ist.

5. Bremsaktuator nach Anspruch 3 oder 4, **dadurch gekennzeichnet, dass** in einem gelösten Bremszustand das Betätigungselement (6) in einer Weise mit Druck (p) beaufschlagt ist, dass das zumindest eine Federelement (12) an einer Entspannung gehindert ist.

6. Bremsaktuator nach einem der Ansprüche 1 bis 5, **dadurch gekennzeichnet, dass** das Kraftübersetzungselement (7) keilförmig ausgebildet ist und dessen Höhe eine Keilhöhe (10) ist.

7. Bremsaktuator nach Anspruch 6, **dadurch gekennzeichnet, dass** das Kraftübersetzungselement (7) einen in Abhängigkeit einer Keillänge (9) veränderlichen Neigungswinkel (α) aufweist.

8. Bremsaktuator nach einem der Ansprüche 3 bis 7, **dadurch gekennzeichnet, dass** das zumindest eine Federelement (12) das Kraftübersetzungselement (7) zumindest teilweise ummantelnd angeordnet ist.

9. Bremsaktuator nach einem der Ansprüche 3 bis 8, **dadurch gekennzeichnet, dass** mit einem Bremsaktuatorgehäuse (5) eine Hydraulik-Lösevorrichtung (31) verbunden ist, wobei in einem gelösten Bremszustand die Hydraulik-Lösevorrichtung (31) die Betätigungsvorrichtung (1) in einer Weise kontaktiert, dass das zumindest eine Federelement (12) an einer Entspannung gehindert ist.

10. Bremsaktuator nach einem der Ansprüche 1 bis 9, **dadurch gekennzeichnet, dass** mit einem Bremsaktuatorgehäuse (5) eine Mechanik-Lösevorrichtung (32) verbunden ist, wobei in einem gelösten Bremszustand die Betätigungsvorrichtung (1) mit dem Bremsaktuatorgehäuse (5) verschraubt ist.

11. Bremsaktuator nach einem der Ansprüche 1 bis 10, **dadurch gekennzeichnet, dass** mit einem Bremsaktuatorgehäuse (5) ein Endlagenschalter (36), welcher in einer Endlage der Betätigungsvorrichtung (1) mittels der Betätigungsvorrichtung (1) betätigt ist, verbunden ist.

12. Bremseinheit mit einem Bremsaktuator nach einem der Ansprüche 1 bis 11.

13. Als Bremszange ausgebildete Bremseinheit nach Anspruch 12.

14. Als Klotzbremseinheit ausgebildete Bremseinheit nach Anspruch 12.

15. Bremseinheit nach einem der Ansprüche 12 bis 14, **dadurch gekennzeichnet, dass** mit einem Bremsgestänge (15) ein Verschleißnachsteller (22), welcher in den Bremsaktuator geführt ist, verbunden ist.

## Claims

1. Brake actuator for a brake of a track-guided vehicle, in particular for a brake of a running gear of a rail vehicle, comprising an actuation apparatus (1) and an interior (2), which has a first interior section (3) and a second interior section (4), which is separated from the first interior section (3) by means of the actuation apparatus (1), wherein the actuation apparatus (1) comprises an actuation element (6) to which pressure (p) can be applied in the first interior section (3) and a force transmission element (7) that is connected to the actuation element (6) or embodied in one piece with the actuation element (6) and is arranged in the second interior section (4), these being guided in the interior (2), wherein the force transmission element (7) can be coupled to a brake link (15) and an actuation force (F) can be transferred from the actuation element (6) to the brake link (15) via the force transmission element (7), **characterised in that** the force transmission element (7) has a height that increases as the distance from the actuation element (6) increases, wherein the force transmission element (7) is coupled to the brake link (15) via rollers that are connected to the brake link (15) in a rotatable manner and are able to roll over the force transmission element (7).

2. Brake actuator according to claim 1, **characterised in that** the height is oriented transversely or substantially transversely in relation to a direction of movement of the actuation apparatus (1).

3. Brake actuator according to claim 1 or 2, **characterised in that** at least one spring element (12) mounted in the interior (2) is connected to the actuation apparatus (1).

4. Brake actuator according to claim 3, **characterised in that,** in an actuated brake state, a pressure (p) on the actuation element (6) is less than in a released brake state and the at least one spring element (12) is at least partially relaxed.

5. Brake actuator according to claim 3 or 4, **characterised in that,** in a released brake state, pressure (p) is applied to the actuation element (6) in a manner such that the at least one spring element (12) is hindered from relaxing.

6. Brake actuator according to one of claims 1 to 5, **characterised in that** the force transmission element (7) is embodied in the shape of a wedge and the height thereof is a wedge height (10).

7. Brake actuator according to claim 6, **characterised in that** the force transmission element (7) has an incline angle (α) that varies as a function of a wedge length (9).

8. Brake actuator according to one of claims 3 to 7, **characterised in that** the at least one spring element (12) is arranged such that it at least partially encapsulates the force transmission element (7).

9. Brake actuator according to one of claims 3 to 8, **characterised in that** a hydraulic release apparatus (31) is connected to a brake actuator housing (5), wherein in a released brake state the hydraulic release apparatus (31) contacts the actuation apparatus (1) in a manner such that the at least one spring element (12) is hindered from relaxing.

10. Brake actuator according to one of claims 1 to 9, **characterised in that** a mechanical release apparatus (32) is connected to a brake actuator housing (5), wherein in a released brake state the actuation apparatus (1) is screwed to the brake actuator housing (5).

11. Brake actuator according to one of claims 1 to 10, **characterised in that** a limit switch (36), which is actuated by means of the actuation apparatus (1) when the actuation apparatus (1) is in an end position, is connected to a brake actuator housing (5).

12. Brake unit with a brake actuator according to one of claims 1 to 11.

13. Brake unit according to claim 12 embodied as a brake calliper.

14. Brake unit according to claim 12 embodied as a block brake unit.

15. Brake unit according to one of claims 12 to 14, **characterised in that** a wear adjuster (22), which is guided in the brake actuator, is connected to a brake link (15).

## Revendications

1. Actionneur de frein pour un frein d'un véhicule guidé sur voie, plus particulièrement pour un frein d'un train de roulement d'un véhicule ferroviaire, comprenant un dispositif d'actionnement (1) et un espace interne (2), lequel présente une première section d'espace interne (3) et une deuxième section d'espace interne (4), laquelle est séparée de la première section d'espace interne (3) au moyen du dispositif d'actionnement (1), dans lequel le dispositif d'actionnement (1) comprend un élément d'actionnement (6) pouvant être alimenté en pression (p) dans la première section d'espace interne (3) et un élément de transmission de force (7), relié à l'élément d'actionnement (6) ou conçu d'une seule pièce avec l'élément d'actionnement (6), disposé dans la deuxième section d'espace interne (4), lesquels sont guidés dans l'espace interne (2), dans lequel l'élément de transmission de force (7) peut être couplé à une tringlerie de frein (15) et une force d'actionnement (F) peut être transmise de l'élément d'actionnement (6) à la tringlerie de frein (15) par l'élément de transmission de force (7), **caractérisé en ce que** l'élément de transmission de force (7) présente une hauteur croissante avec une distance croissante de l'élément d'actionnement (6), dans lequel l'élément de transmission de force (7) est couplé à la tringlerie de frein (15) par des galets reliés de façon rotative à la tringlerie de frein (15), lesquels peuvent rouler sur l'élément de transmission de force (7).

2. Actionneur de frein selon la revendication 1, **caractérisé en ce que** la hauteur est orientée transversalement ou essentiellement transversalement à un sens de mouvement du dispositif d'actionnement (1).

3. Actionneur de frein selon la revendication 1 ou 2, **caractérisé en ce qu'**au moins un élément élastique (12) logé dans l'espace interne (2) est relié au dispositif d'actionnement (1).

4. Actionneur de frein selon la revendication 3, **caractérisé en ce que** dans un état actionné du frein, une pression (p) sur l'élément d'actionnement (6) est plus faible que dans un état débloqué du frein et le au moins un élément élastique (12) est au moins partiellement détendu.

5. Actionneur de frein selon la revendication 3 ou 4, **caractérisé en ce que** dans un état débloqué du frein, l'élément d'actionnement (6) est alimenté en pression (p) de telle manière que le au moins un élément élastique (12) est empêché de se détendre.

6. Actionneur de frein selon l'une des revendications 1 à 5, **caractérisé en ce que** l'élément de transmission de force (7) est conçu cunéiforme et sa hauteur est une hauteur de coin (10).

7. Actionneur de frein selon la revendication 6, **caractérisé en ce que** l'élément de transmission de force (7) présente un angle d'inclinaison (α) modifiable en fonction d'une longueur de coin (9) .

8. Actionneur de frein selon l'une des revendications 3 à 7, **caractérisé en ce que** le au moins un élément élastique (12) est disposé en enveloppant au moins partiellement l'élément de transmission de force (7).

9. Actionneur de frein selon l'une des revendications 3 à 8, **caractérisé en ce qu'**un dispositif de déblocage hydraulique (31) est relié à un boîtier d'actionneur de frein (5), dans lequel dans un état débloqué du frein, le dispositif de déblocage hydraulique (31) est mis en contact avec le dispositif d'actionnement (1) de telle manière que le au moins un élément élastique (12) est empêché de se détendre.

10. Actionneur de frein selon l'une des revendications 1 à 9, **caractérisé en ce qu'**un dispositif de déblocage mécanique (32) est relié à un boîtier d'actionneur de frein (5), dans lequel dans un état débloqué du frein, le dispositif d'actionnement (1) est vissé au boîtier d'actionneur de frein (5).

11. Actionneur de frein selon l'une des revendications 1 à 10, **caractérisé en ce qu'**un interrupteur de fin de course (36) est relié à un boîtier d'actionneur de frein (5), lequel est actionné au moyen du dispositif d'actionnement (1) dans une position finale du dispositif d'actionnement (1).

12. Unité de frein avec un actionneur de frein selon l'une des revendications 1 à 11.

13. Unité de frein selon la revendication 12 conçue comme un étrier de frein.

14. Unité de frein selon la revendication 12 conçue comme une unité de frein à sabot.

15. Unité de frein selon l'une des revendications 12 à 14, **caractérisée en ce qu'**un dispositif d'ajustage d'usure (22), lequel est guidé dans l'actionneur de frein, est relié à une tringlerie de frein (15).
